# EUROPÄISCHE PATENTSCHRIFT

(11) **EP 1 764 293 B1**
(45) Veröffentlichungstag und Bekanntmachung des Hinweises auf die Patenterteilung: **04.03.2009**
(21) Anmeldenummer: 06018247.4
(22) Anmeldetag: 31.08.2006
(51) Int. Cl.: B62H 5/18, E05B 67/36

(54) **Bremsscheibenschloss**
Brake disk lock
Serrure pour frein à disque

(30) Priorität: 14.09.2005 DE 102005043926
(43) Veröffentlichungstag der Anmeldung: 21.03.2007
(73) Patentinhaber: ABUS August Bremicker Söhne KG, 58300 Wetter-Volmarstein (DE)
(72) Erfinder:
(74) Vertreter: Manitz, Finsterwald & Partner GbR

(56) Entgegenhaltungen:
- FR-A- 2 720 711
- US-A- 599 245
- US-A- 5 492 206
- US-A- 5 736 924
- US-A- 5 819 889
- US-A- 5 916 279

## Beschreibung

Die Erfindung betrifft ein Bremsscheibenschloss, mit einem Schlosskörper, der einen ersten Gehäuseabschnitt und einen zweiten Gehäuseabschnitt aufweist, die in einer U-förmigen Anordnung einen Aufnahmespalt zur Aufnahme einer Bremsscheibe begrenzen, wobei an dem ersten Gehäuseabschnitt ein Schließbolzen angeordnet ist, der von einer Freigabestellung in eine Schließstellung bewegbar ist, in der der Schließbolzen den Aufnahmespalt verschließt.

Ein derartiges Bremsscheibenschloss dient zum Sichern beispielsweise eines Motorrads, eines Motorrollers oder eines Quads gegen eine unbefugte Benutzung. Hierfür wird das Schloss derart an eine Bremsscheibe des geparkten Fahrzeugs angelegt, dass die Bremsscheibe in den von dem U-förmigen Schlosskörper gebildeten Aufnahmespalt hineinragt. Daraufhin wird der Schließbolzen durch entsprechende Betätigung des Schlosses in eine Schließstellung bewegt, in der der Schließbolzen den Aufnahmespalt durchquert und dabei durch eine Belüftungsöffnung der Bremsscheibe geführt ist. Hierdurch ist das Schloss an der Bremsscheibe verriegelt, und die Benutzung des Fahrzeugs wird verhindert, bis das Schloss wieder von der Bremsscheibe gelöst wird. An dem Schlosskörper ist ein Verriegelungsmechanismus vorgesehen, durch den der Schließbolzen wahlweise verriegelt oder freigegeben werden kann.

Ein typischer Aufbruchversuch, um ein Bremsscheibenschloss mit U-förmigem Aufbau gewaltsam zu öffnen, besteht darin, einen Meisel in den Aufnahmespalt einzuschlagen, und zwar in den Zwischenraum zwischen der Bremsscheibe und dem Schlosskörper. Hierdurch sollen die U-förmige Anordnung der Gehäuseabschnitte aufgespreizt und letztlich der durch den Schließbolzen verschlossene Aufnahmespalt geöffnet werden, so dass das Schloss von der Bremsscheibe abgenommen werden kann. Um dies zu verhindern, ist es bekannt, den Schlosskörper und den Schließbolzen an geeigneten Stellen entsprechend zu verstärken. Dennoch kann ein Aufspreizen oder Sprengen des Schlosses nicht immer in dem gewünschten Umfang verhindert werden.

Dokument FR-A-2 720 711 offenbart in Bremsscheibenschloss gemäß dem Oberbegriff des Anspruchs 1.

Es ist Aufgabe der Erfindung, ein Bremsscheibenschloss mit einer verbesserten Aufbruchsicherheit zu schaffen, insbesondere gegenüber einem Aufspreizen oder Aufstemmen der Gehäuseabschnitte durch Einwirken eines Meisels oder dergleichen.

Diese Aufgabe wird durch ein Bremsscheibenschloss mit den Merkmalen des Anspruchs 1 gelöst, und insbesondere dadurch, dass der Schließbolzen - wenn der Schließbolzen sich in der Schließstellung befindet - an dem ersten Gehäuseabschnitt in Richtung des zweiten Gehäuseabschnitts versetzbar gelagert ist.

Bei dem erfindungsgemäßen Bremsscheibenschloss ist der Schließbolzen also derart an dem ersten Gehäuseabschnitt des Schlosskörpers angeordnet, dass der Schließbolzen in seiner Schließstellung nicht unbedingt völlig starr an dem ersten Gehäuseabschnitt befestigt ist. Vielmehr ist vorgesehen, dass der Schließbolzen selbst dann, wenn er bereits von der Freigabestellung in die Schließstellung gebracht worden ist, nochmals in Richtung des zweiten Gehäuseabschnitts versetzt werden kann, zumindest bei Einwirken einer Mindestkraft auf den Schließbolzen. Der Schließbolzen kann also in seiner Schließstellung von einer Normalgebrauchslage noch weiter in Richtung des zweiten Gehäuseabschnitts gebracht werden, nämlich in eine Ausfahrposition, wobei der Schließbolzen seine Schließstellung beibehält. Wenn durch entsprechende Gewalteinwirkung auf den Schlosskörper der zweite Gehäuseabschnitt von dem ersten Gehäuseabschnitt des Schlosskörpers abgespreizt wird, so kann der Schließbolzen hierdurch der Bewegung des gewaltsam versetzten zweiten Gehäuseabschnitts folgen. Der von dem Schließbolzen verschlossene Aufnahmespalt des Schlosskörpers bleibt somit auch bei einem gewaltsamen Aufspreizen der U-förmigen Gehäuseabschnitte verschlossen, d.h. das Schloss kann trotz eines derartigen Aufspreizens der U-Form nicht von der Bremsscheibe abgezogen werden.

Die erläuterte Möglichkeit des zusätzlichen Versetzens des Schließbolzens in Richtung des zweiten Gehäuseabschnitts muss nicht unbedingt im regulären Gebrauch des Schlosses durch den befugten Benutzer vorgesehen sein. Vielmehr ist es ausreichend, wenn der Schließbolzen in seiner Schließstellung lediglich im Falle einer vorbestimmten, auf den Schließbolzen ausgeübten Krafteinwirkung in Richtung des zweiten Gehäuseabschnitts des Schlosskörpers versetzbar ist.

Beispielsweise kann an dem ersten Gehäuseabschnitt des Schlosskörpers eine Halteeinrichtung vorgesehen sein, die den Schließbolzen - wenn dieser sich in der Schließstellung befindet - im gewalteinwirkungsfreien Zustand des Schlosses in einer Normalgebrauchslage hält. Nur wenn auf den Schließbolzen direkt oder indirekt eine vorbestimmte Mindestkraft in Richtung des zweiten Gehäuseabschnitts ausgeübt wird, gibt die Halteeinrichtung den Schließbolzen für das erläuterte Versetzen in Richtung des zweiten Gehäuseabschnitts frei. Zu diesem Zweck kann die Halteeinrichtung mit dem Schließbolzen beispielsweise nach Art einer Sollbruchstelle, aufgrund eines Reibschlusses oder aufgrund eines Rastschlusses zusammenwirken. Wichtig ist in diesem Zusammenhang, dass die Halteeinrichtung den Schließbolzen im regulären Gebrauch in der genannten Normalgebrauchslage hält, während bei Überwinden einer bestimmten Auslöseschwelle der Schließbolzen über die Normalgebrauchslage hinaus noch weiter in Richtung des zweiten Gehäuseabschnitts des Schlosskörpers ausgefahren werden kann.

Vorzugsweise erfolgt die Lagerung des Schließbolzens an dem ersten Gehäuseabschnitt des Schlosskörpers dergestalt, dass der Schließbolzen in seiner Schließstellung lediglich um eine begrenzte Wegstrecke in Richtung des zweiten Gehäuseabschnitts versetzt werden kann. Es ist also eine Begrenzungseinrichtung - wie Anschläge oder dergleichen - vorgesehen, durch die verhindert wird, dass der Schließbolzen beliebig weit aus dem ersten Gehäuseabschnitt des Schlosskörpers herausbewegt werden kann. Nachdem der Schließbolzen aufgrund einer entsprechenden Gewalteinwirkung auf das Schloss eine maximale Ausfahrposition erreicht hat, trägt also die genannte Begrenzungseinrichtung dazu bei, ein gewaltsames weiteres Öffnen des Aufnahmespalts des Schlosskörpers zu verhindern.

Ferner ist es bevorzugt, wenn der Schließbolzen in seiner Schließstellung an dem ersten Gehäuseabschnitt des Schlosskörpers drehfest gelagert ist. Unabhängig davon, ob der Schließbolzen sich in der genannten Normalgebrauchslage oder - aufgrund einer Gewalteinwirkung - in der erläuterten Ausfahrposition befindet, soll der Schließbolzen also hinsichtlich seiner Drehstellung relativ zu dem ersten Gehäuseabschnitt gesichert sein. Hierdurch ist gewährleistet, dass auch bei dem erläuterten Versetzen des Schließbolzens die Funktionalität des eigentlichen Verriegelungsmechanismus des Schlosses nicht außer Kraft gesetzt wird.

Zur Verwirklichung der erläuterten Versetzbarkeit des Schließbolzens kann beispielsweise vorgesehen sein, dass der Schließbolzen und eine zugeordnete Schließbolzenführung des ersten Gehäuseabschnitts des Schlosses über wenigstens einen Vorsprung zusammenwirken, der in eine zugeordnete Nut eingreift. Der Vorsprung kann an dem Schließbolzen vorgesehen sein, während die Nut an der Schließbolzenführung ausgebildet ist, oder umgekehrt. Vorzugsweise ist die Nut mit einem Anschlag versehen, um die erläuterte Begrenzung der Versetzbarkeit des Schließbolzens zu verwirklichen.

Besonders vorteilhaft ist es ferner, wenn der Schließbolzen in seiner Schließstellung mit dem zweiten Gehäuseabschnitt dergestalt zusammenwirkt, dass der Schließbolzen gegen eine axiale Relativbewegung weg von dem zweiten Gehäuseabschnitt gesichert ist. Hierdurch ist sichergestellt, dass bei einem gewaltsamen Aufspreizen des U-förmigen Schlosskörpers der zweite Gehäuseabschnitt den Schließbolzen mitzieht, so dass hierdurch das erläuterte zusätzliche Versetzen des Schließbolzens bewirkt wird und der Aufnahmespalt des Schlosskörpers verschlossen bleibt. Beispielsweise kann vorgesehen sein, dass der Schließbolzen in seiner Schließstellung an dem zweiten Gehäuseabschnitt verhakt ist, insbesondere durch ein Hintergreifen eines zugeordneten Sicherungsabschnitts des zweiten Gehäuseabschnitts.

Gemäß einer vorteilhaften Weiterbildung der Erfindung ist der zweite Gehäuseabschnitt des Schlosskörpers mehrteilig aufgebaut, nämlich zumindest mit einem ersten Längsabschnitt, der mit dem ersten Gehäuseabschnitt des Schlosskörpers verbunden ist, sowie mit einem zweiten Längsabschnitt, der zur Aufnahme des Schließbolzens in dessen Schließstellung dient. Bei dieser Weiterbildung ist vorgesehen, dass der zweite Längsabschnitt relativ zu dem ersten Längsabschnitt in einer Längsrichtung des zweiten Gehäuseabschnitts bzw. parallel zu der Erstreckung des Aufnahmespalts des Schlosskörpers versetzt werden kann. Diese Eigenschaft bringt den Vorteil, dass bei einem gewaltsamen Aufspreizen des U-förmigen Schlosskörpers der Schließbolzen und der zweite Gehäuseabschnitt des Schlosskörpers nicht völlig starr miteinander verbunden sind, sondern zwischen dem Schließbolzen und dem genannten ersten Längsabschnitt des zweiten Gehäuseabschnitts eine gewisse Relativbewegung möglich ist. Hierdurch kann der zweite Gehäuseabschnitt des Schlosskörpers beim Einwirken eines Aufbruchwerkzeugs - wie eines Meisels - bewusst etwas nachgeben, wodurch die Wirksamkeit des Aufbruchwerkzeugs geschwächt wird. Beispielsweise kann der Aufnahmespalt des Schlosskörpers sich so weit aufweiten, dass ein angesetzter Meisel durch den Aufnahmespalt hindurch rutscht, ohne dass letztlich die von dem Schlosskörper und dem Schließbolzen gebildete geschlossene Schleife geöffnet wird.

Hinsichtlich der erläuterten Weiterbildung ist es bevorzugt, wenn an dem zweiten Gehäuseabschnitt eine Fixiereinrichtung ausgebildet ist, die den genannten ersten Längsabschnitt und den genannten zweiten Längsabschnitt des zweiten Gehäuseabschnitts dergestalt aneinander fixiert, dass im gewaltfreien Gebrauch des Schlosses durch den befugten Benutzer die beiden Längsabschnitte in einer Normalverbindungslage relativ zueinander gehalten werden. Erst bei Überwinden einer auf den zweiten Gehäuseabschnitt ausgeübten Mindestkraft gibt die Fixiereinrichtung den zweiten Längsabschnitt für ein Versetzen weg von dem ersten Längsabschnitt frei. Als Fixiereinrichtung können beispielsweise Rastmittel und/oder eine Fixierschraube vorgesehen sein.

Weitere Ausführungsformen der Erfindung sind in den Unteransprüchen genannt.

Die Erfindung wird nachfolgend lediglich beispielhaft unter Bezugnahme auf die Zeichnungen näher erläutert.
- Fig. 1: zeigt eine Seitenansicht eines erfindungsgemäßen Bremsscheibenschlosses.
- Fig. 2: zeigt eine Querschnittsansicht des Schlosses.
- Fig. 3: zeigt einen Querschnitt entlang der Ebene III-III gemäß Fig. 2.
- Fig. 4: zeigt eine Explosionsansicht des Schlosses von schräg oben.
- Fig. 5: zeigt eine aufgeschnittene Detailansicht des Bereichs V des Schlosskörpers gemäß Fig. 4.
- Fig. 6: zeigt eine Explosionsansicht von schräg unten.
- Fig. 7a und 7b: zeigen eine Seitenansicht bzw. eine Draufsicht des Schließbolzens des Schlosses.

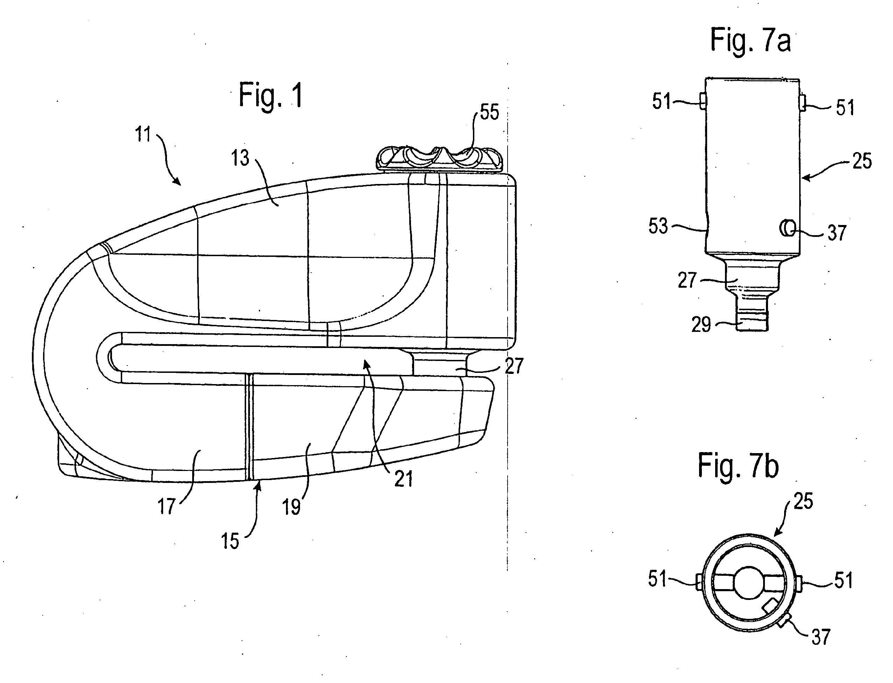

In den Figuren ist ein Ausführungsbeispiel eines erfindungsgemäßen Bremsscheibenschlosses gezeigt. Dieses besitzt einen Schlosskörper 11 mit einem im Wesentlichen U-förmigen Aufbau (vgl. Fig. 1). Der eine Schenkel dieser U-Form bildet einen oberen Gehäuseabschnitt 13, und der andere U-Schenkel bildet einen unteren Gehäuseabschnitt 15. Letzerer ist zweiteilig ausgebildet, mit einem hinteren Längsabschnitt 17, der mit dem oberen Gehäuseabschnitt 13 einstückig verbunden ist, und mit einem vorderen Längsabschnitt 19, der mit dem hinteren Längsabschnitt 17 längsverschiebbar verbunden ist, wie nachfolgend noch erläutert wird. Der obere Gehäuseabschnitt 13 und der untere Gehäuseabschnitt 15 des Schlosskörpers 11 verlaufen im Wesentlichen parallel zueinander, und sie begrenzen einen Aufnahmespalt 21 zur Aufnahme einer Bremsscheibe eines Motorrads oder dergleichen.

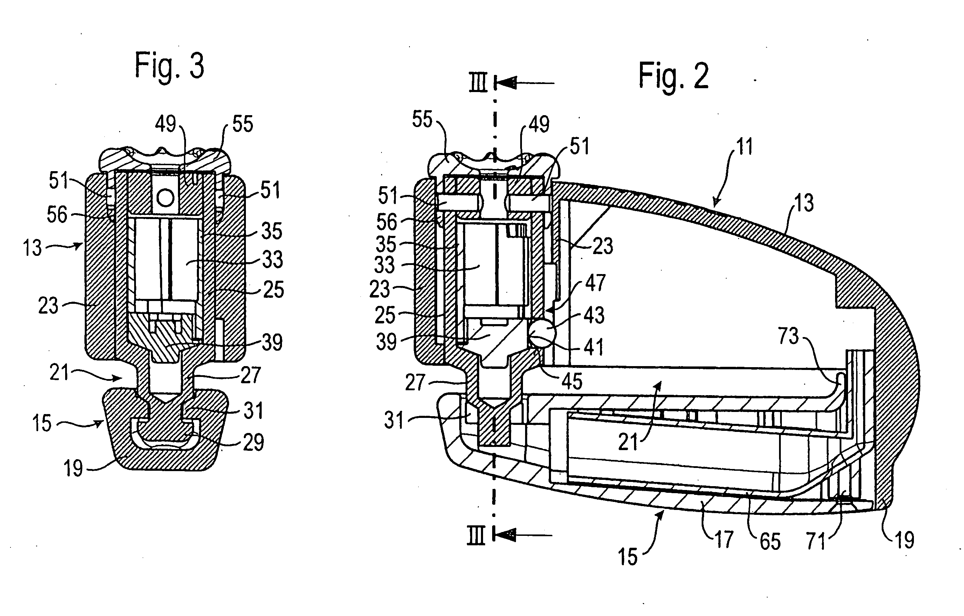

An dem oberen Gehäuseabschnitt 13 ist eine im Wesentlichen hohlzylindrische Schließbolzenführung 23 ausgebildet, in der ein Schließbolzen 25 gelagert ist. Der Schließbolzen 25 besitzt einen im Wesentlichen hohlzylindrischen Aufbau mit einer offenen Oberseite, wobei die geschlossene Unterseite des Schließbolzens 25 sich zu einem Riegelabschnitt 27 verjüngt, an dem zwei seitlich abstehende Verriegelungsansätze 29 ausgebildet sind. In der in Fig. 2 und 3 gezeigten Schließstellung des Schließbolzens 25 durchquert der Riegelabschnitt 27 den Aufnahmespalt 21 und verschließt diesen somit. Die beiden Verriegelungsansätze 29 hintergreifen dabei einen jeweiligen Sicherungsabschnitt 31 des vorderen Längsabschnitts 19 des unteren Gehäuseabschnitts 15 (vgl. Fig. 3).

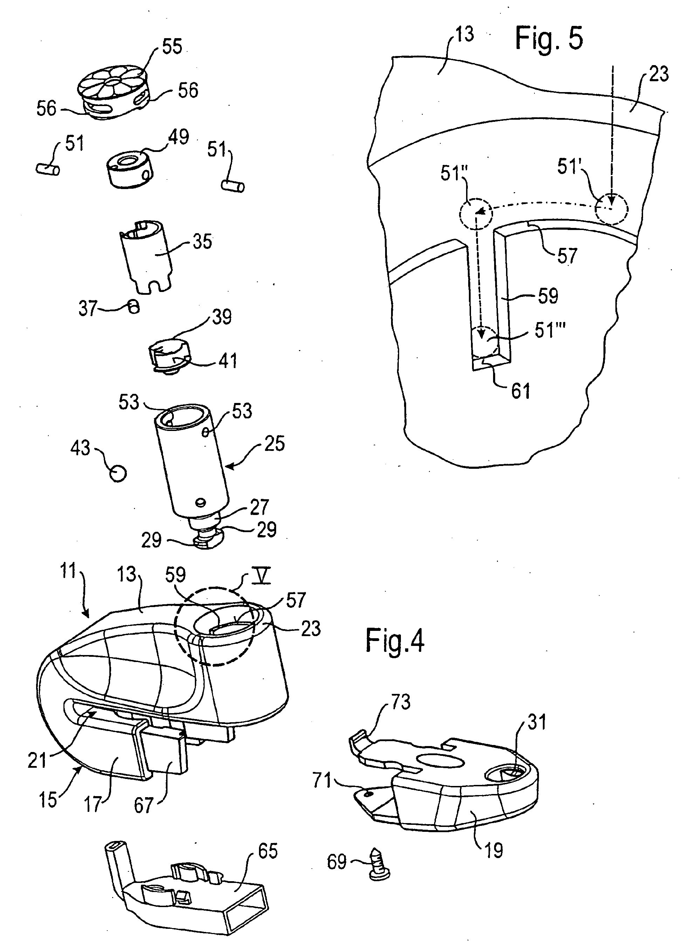

Der Innenraum des Schließbolzens 25 beherbergt einen konventionellen Schließzylinder 33 (vgl. Fig. 2 und 3). Eine zugeordnete Zylinderhalterung 35 ist über einen Sicherungsstift 37 (vgl. Fig. 4) drehfest mit dem Schließbolzen 25 verbunden. Ein drehbetätigbares Antriebselement an der Unterseite des Schließzylinders 33 ist mit einem drehbar gelagerten Mitnehmer 39 gekoppelt. Der Mitnehmer 39 besitzt eine seitliche Führungsfläche 41, die mit einer Schließkugel 43 zusammenwirkt (vgl. Fig. 4). Diese ist in einer Bohrung 45 an der Mantelfläche des Schließbolzens 25 angeordnet und wirkt wahlweise mit einer Verriegelungsnut 47 zusammen, die an der Innenseite der hohlzylindrischen Schließbolzenführung 23 des oberen Gehäuseabschnitts 13 ausgebildet ist (vgl. Fig. 2).

An der Oberseite ist in den Schließbolzen 25 eine Verschlussscheibe 49 eingesetzt, die den Schließzylinder 33 gegen eine Entnahme aus dem Schließbolzen 25 sichert. Die Verschlussscheibe 49 ist mittels zweier Fixier- und Führungsstifte 51 an dem Schließbolzen 25 befestigt. Die Fixier- und Führungsstifte 51 durchqueren eine jeweilige Bohrung 53 der Mantelfläche des Schließbolzens 25 und greifen in entsprechende Bohrungen der Verschlussscheibe 49 ein. Auf den Schließbolzen 25 und die hierin eingesetzte Verschlussscheibe 49 ist eine Schutzkappe 55 aus Kunststoff aufgesetzt. Diese ist an dem Schließbolzen 25 ebenfalls mittels der Fixier- und Führungsstifte 51 befestigt, die zu diesem Zweck aus den Bohrungen 53 radial herausragen und von Befestigungsstegen 56 der Schutzkappe 55 umgriffen werden (vgl. Fig. 2 und 3).

An der Innenseite der hohlzylindrischen Schließbolzenführung 23 des Schlosskörpers 11 ist wenigstens eine Umfangsschulter 57 ausgebildet, die in eine Führungsnut 59 mündet, die sich parallel zu der Längsachse des Schließbolzens 25 erstreckt und in Längsrichtung durch eine Anschlagfläche 61 begrenzt ist (vgl. Detailansicht gemäß Fig. 5). Die Umfangsschulter 57 und die Führungsnut 59 wirken mit einem zugeordneten Fixier- und Führungsstift 51 zusammen, wie nachfolgend noch erläutert wird.

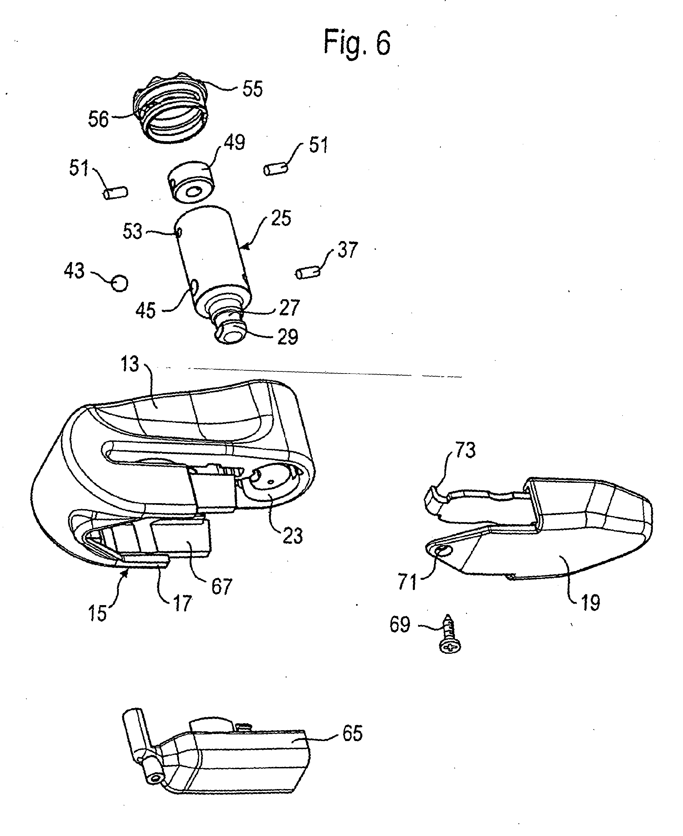

Aus den Explosionsansichten gemäß Fig. 4 und 6 gehen noch die folgenden Einzelheiten hervor: In den unteren Gehäuseabschnitt 17 des Schlosskörpers 11 ist ein Kunststoffeinsatz 65 eingesetzt. Dieser dient für eine Energieversorgung, die nicht Gegenstand der vorliegenden Erfindung und deshalb auch nicht vollständig dargestellt ist und nicht näher erläutert wird. An dem hinteren Längsabschnitt 17 des unteren Gehäuseabschnitts 15 sind axial ausgerichtete Führungszungen 67 angeformt. Auf diese wird der vordere Längsabschnitt 19 des unteren Gehäuseabschnitts 15 in einer Richtung parallel zu der Erstreckung des Aufnahmespalts 21 aufgeschoben, wenn die beiden Längsabschnitte 15, 17 für die Montage des Schlosses miteinander verbunden werden. Die Sicherung des vorderen Längsabschnitts 19 an dem hinteren Längsabschnitt 17 des unteren Gehäuseabschnitts 15 erfolgt mittels einer Fixierschraube 69, die durch eine Fixierbohrung 71 an der Unterseite des vorderen Längsabschnitts 19 geführt wird und an dem zugeordneten Kunststoffeinsatz 65 verschraubt wird, der mit dem hinteren Längsabschnitt 17 des unteren Gehäuseabschnitts 15 verrastet ist. An seiner Oberseite besitzt der vordere Längsabschnitt 19 des unteren Gehäuseabschnitts 15 eine Abkragung 73 in Form eines umgebogenen Zungenabschnitts. Diese Abkragung 73 weist in Richtung des oberen Gehäuseabschnitts 13, um eine in den Aufnahmespalt 21 des montierten Schlosses eingeführte Bremsscheibe hintergreifen zu können.

Das in den Figuren gezeigte Schloss dient auf an sich bekannte Weise zum Blockieren einer Bremsscheibe eines Motorrads oder dergleichen und somit zur Sicherung des Motorrads gegen unbefugte Benutzung. Hierfür wird das Schloss derart auf die Bremsscheibe aufgesetzt, dass die Bremsscheibe in den Aufnahmespalt 21 hineinragt und der Riegelabschnitt 27 des Schließbolzens 25 eine Belüftungsöffnung der Bremsscheibe durchqueren kann, um hierdurch den Aufnahmespalt 21 zu verschließen und das Schloss an der Bremsscheibe zu sichern.

Der Verriegelungsmechanismus des gezeigten Schlosses funktioniert wie folgt: Um das Schloss auf eine Bremsscheibe aufsetzen zu können, befindet sich der Schließbolzen 25 (mit dem Schließzylinder 33, der Zylinderhalterung 35, dem Mitnehmer 39, der Schließkugel 43, der Verschlussscheibe 49 und der Schutzkappe 55) zunächst in einer Freigabestellung. In dieser Freigabestellung ist der Riegelabschnitt 27 mit den Verriegelungsansätzen 29 des Schließbolzens 25 vollständig aus dem Aufnahmespalt 21 zurückgezogen, und die Oberseite des Schließbolzens 25 mit der Schutzkappe 55 ragt entsprechend aus der Oberseite des oberen Gehäuseabschnitts 13 heraus. Ausgehend von dieser Freigabestellung führt der Benutzer einen dem Schließzylinder 33 zugeordneten Schlüssel (nicht gezeigt) durch eine jeweilige Öffnung an der Schutzkappe 55 und an der Verschlussscheibe 49 in den Schließzylinder 33 ein und bewegt mittels des Schlüssels anschließend den Schließzylinder 33 und somit den Schließbolzen 25 entlang der Längsachse des Schließbolzens 25 nach unten, bis der Riegelabschnitt 27 den Aufnahmespalt 21 durchquert und in den unteren Gehäuseabschnitt 15 des Schlosskörpers 11 eingreift. Anschließend führt der Benutzer eine Drehbetätigung des Schlüssels bzw. des Schließzylinders 33 aus. Diese bewirkt, dass zunächst der Schließbolzen 25 gemeinsam mit dem Schließzylinder 33 um ca. 90° um die Längsachse des Schließbolzens 25 gedreht wird und danach - während das Gehäuse des Schließzylinders 33 und der Schließbolzen 25 nun ihre Drehstellung beibehalten - der Mitnehmer 39 derart gedreht wird, dass die Führungsfläche 41 des Mitnehmers 39 die Schließkugel 43 in die Verriegelungsnut 47 drängt. Der Benutzer kann nun den Schlüssel abziehen.

Der Schließbolzen 25 befindet sich jetzt in der in Fig. 1 bis 3 gezeigten Schließstellung. Die Verriegelungsansätze 29 des Riegelabschnitts 27 hintergreifen die Sicherungsabschnitte 31 des unteren Gehäuseabschnitts 15. Aufgrund des Eingriffs der Schließkugel 43 in die Bohrung 45 des Schließbolzens 25 einerseits und in die Verriegelungsnut 47 der Schließbolzenführung 23 andererseits ist der Schließbolzen 25 gegen eine Drehbewegung gesichert. Die Oberseite des Schließbolzens 25 schließt bündig mit dem oberen Gehäuseabschnitt 13 des Schlosskörpers 11 ab, nur die Schutzkappe 55 ragt aus der Schließbolzenführung 23 heraus.

Um das Schloss wieder für eine Entnahme von der Bremsscheibe freizugeben, wird in umgekehrter Reihenfolge verfahren: Durch entsprechende Drehbetätigung des Schließzylinders 33 wird der Mitnehmer 39 derart gedreht, dass die Schließkugel 43 außer Eingriff mit der Verriegelungsnut 47 gelangen kann, und anschließend wird der Schließbolzen 25 durch weitere Drehbetätigung um ca. 90° gedreht, so dass die Verriegelungsansätze 29 des Riegelabschnitts 27 außer Eingriff mit den Sicherungsabschnitten 31 des unteren Gehäuseabschnitts 15 gelangen. Danach kann der Schließbolzen 25 axial nach oben zurückgezogen werden, in die bereits erläuterte Freigabestellung.

Eine Besonderheit des gezeigten Schlosses besteht darin, dass der Schließbolzen 25 mit dem Riegelabschnitt 27 entlang der Schließbolzenführung 23 nochmals zusätzlich axial in Richtung des unteren Gehäuseabschnitts 15 versetzt werden kann, nachdem der Schließbolzen 25 bereits durch axiale Bewegung in die erläuterte Schließstellung gemäß Fig. 1 bis 3 gebracht worden ist. Diese zusätzliche Versetzbarkeit ist lediglich für den Fall eines Aufbruchversuchs vorgesehen, nämlich wenn versucht wird, den Aufnahmespalt 21 aufzuspreizen oder den Schlosskörper 11 sogar zu sprengen, beispielsweise indem in den Zwischenraum zwischen der in dem Aufnahmespalt 21 befindlichen Bremsscheibe und dem oberen Gehäuseabschnitt 13 oder dem unteren Gehäuseabschnitt 15 ein Meisel eingeschlagen wird. Sofern es bei einem derartigen Aufbruchversuch gelingt, den unteren Gehäuseabschnitt 15 bezüglich des oberen Gehäuseabschnitts 13 wegzubiegen, so wird aufgrund des Eingriffs der Verriegelungsansätze 29 des Riegelabschnitts 27 mit den Sicherungsabschnitten 31 des unteren Gehäuseabschnitts 15 eine Zugkraft auf den Schließbolzen 25 ausgeübt. Aufgrund der axialen Versetzbarkeit des Schließbolzens 25 folgt der Schließbolzen 25 der Bewegung des unteren Gehäuseabschnitts 15. Somit wird verhindert, dass durch ein Aufspreizen des unteren Gehäuseabschnitts 15 relativ zu dem oberen Gehäuseabschnitt 13 der Riegelabschnitt 27 des Schließbolzens 25 letztlich außer Eingriff mit dem unteren Gehäuseabschnitt 15 gerät und der Aufnahmespalt 21 hierdurch letztlich geöffnet wird. Auch bei einem Abspreizen des unteren Gehäuseabschnitts 15 relativ zu dem oberen Gehäuseabschnitt 13 bleibt die von dem Schlosskörper 11 und dem Schließbolzen 25 gebildete Schleife also geschlossen, so dass das Schloss nicht von der Bremsscheibe abgezogen werden kann.

Diese vorteilhafte Versetzbarkeit des Schließbolzens 25 in Richtung des unteren Gehäuseabschnitts 15 wird nachfolgend anhand von Fig. 5 erläutert. Wenn der Schließbolzen 25, wie vorstehend beschrieben, von der Freigabestellung in die Schließstellung gebracht wird, so bewegt sich der betreffende Fixier- und Führungsstift 51 entlang des gestrichelten Pfeils zunächst in die in Fig. 5 gezeigte Position 51'. In dieser Position 51' liegt der Fixier- und Führungsstift 51 auf der Umfangsschulter 57 auf, die hierdurch als axialer Anschlag wirkt. Aufgrund der bereits erläuterten anschließenden Drehbetätigung des Schließbolzens 25 bewegt sich der Fixier- und Führungsstift 51 entlang des strichpunktierten Pfeils in die Position 51". Diese Position 51" entspricht der erläuterten Schließstellung des Schließbolzens 25. Der Fixier- und Führungsstift 51 befindet sich nun genau oberhalb der Führungsnut 59.

Falls nun aufgrund entsprechender Gewalteinwirkung auf das Schloss eine axiale Zugkraft auf den Schließbolzen 25 ausgeübt wird, durchbrechen die Fixier- und Führungsstifte 51 die Befestigungsstege 56 der Schutzkappe 55, die insofern letztlich als Sollbruchstellen wirken. Der Schließbolzen 25 kann sich nun axial in Richtung des unteren Gehäuseabschnitts 15 bewegen, wobei der betreffende Fixier- und Führungsstift 51 sich gemäß dem gepunktet eingezeichneten Pfeil entlang der Führungsnut 59 ggf. bis in die in Fig. 5 gezeigte Position 51'" bewegt.

Aus Fig. 5 sind auch noch die folgenden Eigenschaften des Schlosses ersichtlich. Aufgrund des Eingriffs des betreffenden Fixier- und Führungsstifts 51 in die Führungsnut 59 ist der Schließbolzen 25 auch dann noch drehfest an dem oberen Gehäuseabschnitt 13 des Schlosskörpers 11 gelagert, wenn der Schließbolzen 25 ausgehend von der Schließstellung (Position 51" gemäß Fig. 5) in Richtung des unteren Gehäuseabschnitts 15 versetzt worden ist. Diese Eigenschaft ist wichtig, da durch das zusätzliche axiale Versetzen des Schließbolzens 25 das Zusammenwirken der Schließkugel 43 mit der Verriegelungsnut 47 (vgl. Fig. 2) außer Kraft gesetzt werden könnte und dennoch gewährleistet sein soll, dass der Schließbolzen 25 mit den Verriegelungsansätzen 29 an dem Riegelabschnitt 27 nicht relativ zu den Sicherungsabschnitten 31 des unteren Gehäuseabschnitts 15 (Fig. 3) verdreht werden kann.

Außerdem ist aus Fig. 5 ersichtlich, dass die Anschlagfläche 61 als unterer Anschlag für den betreffenden Fixier- und Führungsstift 51 wirkt. Der Schließbolzen 25 kann hierdurch nicht beliebig weit aus der Schließbolzenführung 23 in Richtung des unteren Gehäuseabschnitts 25 herausgezogen werden.

Eine weitere Besonderheit des gezeigten Schlosses besteht in dem bereits erläuterten zweiteiligen Aufbau des unteren Gehäuseabschnitts 15. Auch der vordere Längsabschnitt 19 des unteren Gehäuseabschnitts 15 kann nämlich im Falle eines Aufbruchversuchs der erläuterten Art relativ zu dem hinteren Längsabschnitt 17 bewegt werden. Der vordere Längsabschnitt 19 ist mit dem hinteren Längsabschnitt 17 nämlich über die Fixierschraube 19 verbunden, die lediglich an einem Kunststoffeinsatz 65 angreift, der wiederum mit dem hinteren Längsabschnitt 17 nur verrastet ist. Wenn also infolge eines Aufbruchversuchs auf den vorderen Längsabschnitt 19 eine bestimmte Zugkraft relativ zu dem hinteren Längsabschnitt 17 ausgeübt wird, so löst sich die Verankerung des vorderen Längsabschnitts 19, ähnlich wie dies vorstehend im Zusammenhang mit dem Zusammenwirken der Fixier- und Führungsstifte 51 mit der Schutzkappe 55 erläutert worden ist. Die Versetzbarkeit des vorderen Längsabschnitts 19 relativ zu dem hinteren Längsabschnitt 17 des unteren Gehäuseabschnitts 15 bewirkt, dass sich im Falle eines Aufbruchversuchs der Umfang der durch den Schlosskörper 11 und den Riegelabschnitt 27 gebildeten Schleife vergrößert, wodurch das Ansetzen eines Aufbruchwerkzeugs (z.B. Meisel) erschwert und die Wirksamkeit eines solchen Aufbruchwerkzeugs verringert werden.

Die Führungszungen 67 gewährleisten hierbei eine axiale Verschiebbarkeit der beiden Längsabschnitte 17, 19 relativ zueinander. Ein vollständiges Abziehen des vorderen Längsabschnitts 19 von dem hinteren Längsabschnitt 17 wird im Falle eines Aufbruchversuchs dadurch verhindert, dass der Riegelabschnitt 27 mit den Verriegelungsansätzen 29 weiterhin in den vorderen Längsabschnitt 19 eingreift. Zusätzlich dient die an der Oberseite des vorderen Längsabschnitts 19 ausgebildete Abkragung 73 als Anschlag, da die Abkragung 73 an der in dem Aufnahmespalt 21 befindlichen Bremsscheibe angreift und somit eine weitere Axialbewegung des vorderen Längsabschnitts 19 verhindert.

### Bezugszeichenliste

- 11: Schlosskörper
- 13: oberer Gehäuseabschnitt
- 15: unterer Gehäuseabschnitt
- 17: hinterer Längsabschnitt des unteren Gehäuseabschnitts
- 19: vorderer Längsabschnitt des unteren Gehäuseabschnitts
- 21: Aufnahmespalt
- 23: Schließbolzenführung
- 25: Schließbolzen
- 27: Riegelabschnitt
- 29: Verriegelungsansatz
- 31: Sicherungsabschnitt
- 33: Schließzylinder
- 35: Zylinderhalterung
- 37: Sicherungsstift
- 39: Mitnehmer
- 41: Führungsfläche
- 43: Schließkugel
- 45: Bohrung
- 47: Verriegelungsnut
- 49: Verschlussscheibe
- 51: Fixier- und Führungsstift
- 51', 51", 51"': Position des Fixier- und Führungsstifts
- 53: Bohrung
- 55: Schutzkappe
- 56: Befestigungssteg
- 57: Umfangsschulter
- 59: Führungsnut
- 61: Anschlagfläche
- 65: Kunststoffeinsatz
- 67: Führungszunge
- 69: Fixierschraube
- 71: Fixierbohrung
- 73: Abkragung

## Patentansprüche

1. Bremsscheibenschloss, mit einem Schlosskörper (11), der einen ersten Gehäuseabschnitt (13) und einen zweiten Gehäuseabschnitt (15) aufweist, die in einer U-förmigen Anordnung einen Aufnahmespalt (21) zur Aufnahme einer Bremsscheibe begrenzen,
wobei an dem ersten Gehäuseabschnitt (13) ein Schließbolzen (25, 27) angeordnet ist, der von einer Freigabestellung in eine Schließstellung bewegbar ist, in der der Schließbolzen den Aufnahmespalt verschließt,
**dadurch gekennzeichnet;**
**dass** der Schließbolzen (25, 27) - wenn der Schließbolzen sich in der Schließstellung befindet - an dem ersten Gehäuseabschnitt (13) in Richtung des zweiten Gehäuseabschnitts (15) versetzbar gelagert ist.

2. Schloss nach Anspruch 1,
**dadurch gekennzeichnet,**
**dass** der Schließbolzen (25, 27) in der Schließstellung zumindest bei Einwirkung einer vorbestimmten Mindestkraft in Richtung des zweiten Gehäuseabschnitts (15) versetzbar ist.

3. Schloss nach einem der vorhergehenden Ansprüche,
**dadurch gekennzeichnet,**
**dass** der Schließbolzen (25, 27) in der Schließstellung an dem ersten Gehäuseabschnitt (13) dergestalt gelagert ist, dass der Schließbolzen lediglich um eine begrenzte Distanz in Richtung des zweiten Gehäuseabschnitts (15) versetzbar ist.

4. Schloss nach einem der vorhergehenden Ansprüche,
**dadurch gekennzeichnet,**
**dass** der Schließbolzen (25, 27) in der Schließstellung an dem ersten Gehäuseabschnitt (13) in Richtung des zweiten Gehäuseabschnitts (15) axial versetzbar gelagert ist.

5. Schloss nach einem der vorhergehenden Ansprüche,
**dadurch gekennzeichnet,**
**dass** der Schließbolzen (25, 27) in der Schließstellung an dem ersten Gehäuseabschnitt (13) drehfest gelagert ist, und/oder
**dass** der Schließbolzen (25, 27) - wenn der Schließbolzen ausgehend von der Schließstellung in Richtung des zweiten Gehäuseabschnitts (15) versetzt worden ist - an dem ersten Gehäuseabschnitt (13) drehfest gelagert ist

6. Schloss nach einem der vorhergehenden Ansprüche,
**dadurch gekennzeichnet,**
**dass** der Schließbolzen (25) und eine Schließbolzenführung (23) des ersten Gehäuseabschnitts (13) über wenigstens einen Vorsprung (51) zusammenwirken, der in eine zugeordnete Nut (59) eingreift, um ein axiales Versetzen des Schließbolzens relativ zu der Schließbolzenführung zu ermöglichen.

7. Schloss nach einem der vorhergehenden Ansprüche,
**dadurch gekennzeichnet,**
**dass** an dem ersten Gehäuseabschnitt (13) eine Halteeinrichtung (55, 56) vorgesehen ist, die mit dem Schließbolzen (25) dergestalt zusammenwirkt, dass
- die Halteeinrichtung den Schließbolzen - wenn der Schließbolzen sich in der Schließstellung befindet - im gewaltfreien Gebrauch des Schlosses in einer Normalbetriebsposition hält, und
- die Halteeinrichtung bei Erreichen einer auf den Schließbolzen ausgeübten Mindestkraft den Schließbolzen für ein Versetzen in Richtung des zweiten Gehäuseabschnitts freigibt.

8. Schloss nach Anspruch 7,
**dadurch gekennzeichnet,**
**dass** die Halteeinrichtung (56) und der Schließbolzen (25) nach Art einer Sollbruchstelle, eines Reibschlusses oder eines Rastschlusses zusammenwirken.

9. Schloss nach einem der vorhergehenden Ansprüche,
**dadurch gekennzeichnet,**
**dass** der Schließbolzen (25, 27) in der Schließstellung mit dem zweiten Gehäuseabschnitt (15) dergestalt zusammenwirkt, dass der Schließbolzen gegen eine Relativbewegung weg von dem zweiten Gehäuseabschnitt gesichert ist.

10. Schloss nach einem der vorhergehenden Ansprüche,
**dadurch gekennzeichnet,**
**dass** der Schlosskörper (11) bezüglich seiner U-förmigen Ausbildung mehrteilig aufgebaut ist, mit mehreren Längsabschnitten (17, 19), die relativ zueinander in Längsrichtung versetzbar sind.

11. Schloss nach einem der vorhergehenden Ansprüche,
**dadurch gekennzeichnet,**
**dass** der zweite Gehäuseabschnitt (15) des Schlosskörpers (11) zumindest zweiteilig aufgebaut ist, mit einem ersten Längsabschnitt (17), der mit dem ersten Gehäuseabschnitt (13) verbunden ist, und mit einem zweiten Längsabschnitt (19), der zur Aufnahme des Schließbolzens (25, 27) in dessen Schließstellung dient, wobei der zweite Längsabschnitt relativ zu dem ersten Längsabschnitt in einer Längsrichtung des zweiten Gehäuseabschnitts versetzbar ist.

12. Schloss nach Anspruch 11,
**dadurch gekennzeichnet,**
**dass** an dem zweiten Gehäuseabschnitt (15) eine Fixiereinrichtung (69, 71) vorgesehen ist, die die den ersten Längsabschnitt (17) und den zweiten Längsabschnitt (19) des zweiten Gehäuseabschnitts dergestalt aneinander fixiert, dass
- die Fixiereinrichtung im gewaltfreien Gebrauch des Schlosses die beiden Längsabschnitte (17, 19) in einer Normalverbindungslage hält, und
- die Fixiereinrichtung bei Erreichen einer auf den zweiten Gehäuseabschnitt ausgeübten Mindestkraft den zweiten Längsabschnitt für ein Versetzen weg von dem ersten Längsabschnitt freigibt.

13. Schloss nach einem der Ansprüche 11 oder 12,
**dadurch gekennzeichnet,**
**dass** die beiden Längsabschnitte (17, 19) des zweiten Gehäuseabschnitts (15) parallel zu der Erstreckung des Aufnahmespalts (21) des Schlosses verschiebbar aneinander gelagert sind.

14. Schloss nach einem der Ansprüche 11 bis 13,
**dadurch gekennzeichnet,**
**dass** der zweite Längsabschnitt (19) des zweiten Gehäuseabschnitts (15) eine Abkragung (73) aufweist, die in Richtung des ersten Gehäuseabschnitts (13) des Schlosses weist und die zumindest dann, wenn der zweite Längsabschnitt relativ zu dem ersten Längsabschnitt versetzt worden ist, in den Aufnahmespalt (21) des Schlosses greift.

## Claims

1. A brake disc lock having a lock body (11) which has a first housing section (13) and a second housing section (15) which bound a receiving gap (21) in a U-shaped arrangement for the reception of a brake disc,
wherein a locking bolt (25, 27) is arranged at the first housing section (13) and is movable from a release position into a locked position in which the locking bolt closes the receiving gap,
**characterised in that**
the locking bolt (25, 27) - when the locking bolt is in the locked position - is displaceably supported at the first housing section (13) in the direction of the second housing section (15).

2. A lock in accordance with claim 1, **characterised in that** the locking bolt (25, 27) in the locked position is displaceable in the direction of the second housing section (15) at least on the influence of a preset minimum force.

3. A lock in accordance with one of the preceding claims, **characterised in that** the locking bolt (25, 27) is supported at the first housing section (13) in the locked position such that the locking bolt can only be displaced by a limited distance in the direction of the second housing section (15).

4. A lock in accordance with any one of the preceding claims, **characterised in that** the locking bolt (25, 27) is axially displaceably supported in the direction of the second housing section (15) at the first housing section (13).

5. A lock in accordance with any one of the preceding claims, **characterised in that** the locking bolt (25, 27) is rotationally fixedly supported at the first housing section (13) in the locked position; and/or
**in that** the locking bolt (25, 27)) - when the locking bolt has been displaced in the direction of the second housing section (15) starting from the locked position - is rotationally fixedly supported at the first housing section (13.

6. A lock in accordance with any one of the preceding claims, **characterised in that** the locking bolt (25) and a locking bolt guidance (23) of the first housing section (13) cooperate via at least one projection (51) which engages into an associated groove (59) to enable an axial displacement of the locking bolt relative to the locking bolt guidance.

7. A lock in accordance with any one of the preceding claims, **characterised in that** a holding device (55, 56) is provided at the first housing section (13) and cooperates with the locking bolt (25) such that
- the holding device - when the locking bolt is in the locked position - holds the locking bolt in a normal operation position in the non-forced use of the lock; and
- the holding device releases the locking bolt for a displacement in the direction of the second housing section on the reaching of a minimum force exerted onto the locking bolt.

8. A lock in accordance with claim 7, **characterised in that** the holding device (56) and the locking bolt (25) cooperate in the manner of a desired break position, of a friction locking or of a latch locking.

9. A lock in accordance with any one of the preceding claims, **characterised in that** the locking bolt (25, 27) cooperates with the second housing section (15) in the locked position such that the locking bolt is secured against a relative movement away from the second housing section.

10. A lock in accordance with any one of the preceding claims, **characterised in that** the lock body (11) is made up of a plurality of parts with respect to its U-shaped design with a plurality of elongate sections (17, 19) which are displaceable relative to one another in the longitudinal direction.

11. A lock in accordance with any one of the preceding claims, **characterised in that** the second housing section (15) of the lock body (11) is made up of at least two parts, with a first elongate section (17) which is connected to the first housing section (13), and with a second elongate section (19) which serves for the reception of the locking bolt (25, 27) in its locked position, with the second elongate section being displaceable relative to the first elongate section in a longitudinal direction of the second housing section.

12. A lock in accordance with claim 11, **characterised in that** a fixing device (69, 71) is provided at the second housing section (15) and fixes the first elongate section (17) and the second elongate section (19) of the second housing section to one another such that
- the fixing device holds the two elongate sections (17, 19) in a normal connection position in the force-free use of the lock; and
- the fixing device releases the second elongate section for a displacement away from the first elongate section on the reaching of a minimum force exerted onto the second housing section.

13. A lock in accordance with one of the claims 11 or 12, **characterised in that** the two elongate sections (17, 19) of the second housing section (15) are supported displaceably toward one another parallel to the extent of the receiving gap (21) of the lock.

14. A lock in accordance with any one of the claims 11 to 13, **characterised in that** the second elongate section (19) of the second housing section (15) has a protrusion (73) which faces in the direction of the first housing section (13) of the lock and which engages into the receiving gap (21) of the lock at least when the second elongate section has been displaced relative to the first elongate section.

## Revendications

1. Cadenas pour disque de frein, comprenant un corps de cadenas (11) qui comporte un premier tronçon de boîtier (13) et un second tronçon de boîtier (15) lesquels délimitent, dans un agencement en forme de U, une fente de réception (21) pour recevoir un disque de frein,
dans lequel un goujon de fermeture (25, 27) est agencé sur le second tronçon de boîtier (13), ce goujon étant déplaçable d'une position de libération jusque dans une position de fermeture dans laquelle le goujon de fermeture referme la fente de réception,
**caractérisé en ce que**
quand le goujon de fermeture se trouve dans la position de fermeture, le goujon de fermeture (25, 27) est monté sur le premier tronçon de boîtier (13) de manière à pouvoir être déplacé dans la direction du second tronçon de boîtier (15).

2. Cadenas selon la revendication 1,
**caractérisé en ce que**, dans la position de fermeture, le goujon de fermeture (25, 27) est déplaçable en direction du second tronçon de boîtier (15) au moins sous l'action d'une force minimum prédéterminée.

3. Cadenas selon l'une des revendications précédentes,
**caractérisé en ce que**, dans la position de fermeture, le goujon de fermeture (25, 27) est monté sur le premier tronçon de boîtier (13) de telle manière que le goujon de fermeture est déplaçable seulement sur une distance limitée en direction du second tronçon de boîtier.

4. Cadenas selon l'une des revendications précédentes,
**caractérisé en ce que**, dans la position de fermeture, le goujon de fermeture (25, 27) est monté sur le premier tronçon de boîtier (13) de manière à pouvoir être déplacé axialement en direction du second tronçon de boîtier (15).

5. Cadenas selon l'une des revendications précédentes,
**caractérisé en ce que**, dans la position de fermeture, le goujon de fermeture (25) est monté solidaire en rotation sur le premier tronçon de boîtier (13), et/ou
**en ce que**, quand le goujon de fermeture (25, 27) a été déplacé en partant de la position de fermeture en direction du second tronçon de boîtier (15), le goujon de fermeture (25, 27) est monté solidairement en rotation sur le premier tronçon de boîtier (13).

6. Cadenas selon l'une des revendications précédentes,
**caractérisé en ce que** le goujon de fermeture (25) et un guidage de goujon (23) du premier tronçon de boîtier (13) coopèrent via au moins une saillie (51) qui s'engage dans une gorge associée (59) pour permettre un déplacement axial du goujon de fermeture par rapport au guidage de goujon.

7. Cadenas selon l'une des revendications précédentes,
**caractérisé en ce que**, sur le premier tronçon de boîtier (13), il est prévu un système de maintien (55, 56) qui coopère avec le goujon de fermeture (25) de telle manière que :
- quand le goujon de fermeture se trouve dans la position de fermeture, le système de fermeture maintient le goujon de fermeture dans une position de service normale dans l'utilisation du cadenas sans violence, et
- lorsqu'on atteint une force minimum exercée sur le goujon de fermeture, le système de fermeture libère le goujon de fermeture pour un déplacement en direction du second tronçon de boîtier.

8. Cadenas selon la revendication 7,
**caractérisé en ce que** le système de maintien (56) et le goujon de fermeture (25) coopèrent à la manière d'un emplacement de rupture de consigne, d'un agencement à la coopération de friction ou d'un agencement à coopération d'enclenchement.

9. Cadenas selon l'une des revendications précédentes,
**caractérisé en ce que**, dans la position de fermeture, le goujon de fermeture (25, 27) coopère avec le second tronçon de boîtier (15) de telle manière que le goujon de fermeture est bloqué à l'encontre d'un mouvement relatif en éloignement du second tronçon de boîtier.

10. Cadenas selon l'une des revendications précédentes,
**caractérisé en ce que** le corps de cadenas (11) est réalisé en plusieurs pièces, par référence à sa réalisation en forme de U, avec plusieurs tronçons longitudinaux (17, 19) qui sont déplaçables les uns par rapport aux autres en direction longitudinale.

11. Cadenas selon l'une des revendications précédentes,
**caractérisé en ce que** le second tronçon de boîtier (15) du corps de cadenas (11) est réalisé au moins en deux parties, avec un premier tronçon longitudinal (17), qui est relié au premier tronçon de boîtier (13), et avec un second tronçon longitudinal (19) qui sert à la réception du goujon de fermeture (25, 27) dans sa position de fermeture, et le second tronçon longitudinal est déplaçable par rapport au premier tronçon longitudinal dans une direction longitudinale du second tronçon de boîtier.

12. Cadenas selon la revendication 11,
**caractérisé en ce que**, sur le second tronçon de boîtier (15), il est prévu un moyen de fixation (69, 71) qui fixe l'un à l'autre le premier tronçon longitudinal (17) et le second tronçon longitudinal (19) du second tronçon de boîtier de telle manière que
- lors de l'utilisation sans violence du cadenas, le moyen de fixation maintient les deux tronçons longitudinaux (17, 19) dans une position de liaison normale, et
- lorsqu'on atteint une force minimum exercée sur le second tronçon de boîtier, le moyen de fixation libère le second tronçon longitudinal pour un déplacement en éloignement du premier tronçon longitudinal.

13. Cadenas selon l'une des revendications 11 ou 12,
**caractérisé en ce que** les deux tronçons longitudinaux (17, 19) du second tronçon de boîtier (15) sont montés de façon déplaçable l'un par rapport à l'autre parallèlement à l'extension de la fente de réception (21) du cadenas.

14. Cadenas selon l'une des revendications ont 11 à 13,
**caractérisé en ce que** le second tronçon longitudinal (19) du second tronçon de boîtier (15) comprend une partie en porte à faux (73) qui est dirigée en direction du premier tronçon de boîtier (13) et qui s'engage dans la fente de réception (21), au moins lorsque le second tronçon longitudinal a été déplacé par rapport au premier tronçon longitudinal.
